# EUROPEAN PATENT SPECIFICATION

(11) **EP 2 522 872 B1**
(45) Date of publication and mention of the grant of the patent: **12.03.2014**
(21) Application number: 12167422.0
(22) Date of filing: 10.05.2012
(51) Int. Cl.: F16D 43/10, F16D 43/18

(54) **Friction-disc clutch with centrifugal engagement/disengagement**
Reibkupplung mit zentrifugaler Schaltung
Embrayage à disques avec engagement / dégagement centrifuge

(30) Priority: 12.05.2011 IT MI20110823
(43) Date of publication of application: 14.11.2012
(73) Proprietor: Catai S.r.l., 20092 Cinisello Balsamo (MI) (IT)
(72) Inventor: Boccalerio, Massimo, 20092 Cinisello Balsamo (MI) (IT)
(74) Representative: Raimondi, Margherita

(56) References cited:
- FR-A- 1 038 512
- FR-A- 1 265 728
- GB-A- 494 368
- JP-A- 5 008 751

## Description

The present invention relates to a clutch comprising a single friction disc with centrifugal engagement/disengagement.

It is known in the technical sector relating to transmission of the driving power to shafts of vehicles such as mini motorcycles and/or go-karts that there exists the need to provide friction clutches, engagement of which is usually performed only at a predefined speed of rotation of the associated driving shaft.

It is also known that, for this purpose, ON/OFF clutches of the centrifugal type have been used where the rotation of dead weights of suitable size causes engagement of the clutch when a predefined number of revolutions is reached.

Examples of such clutches are for example described in GB 494,368 which describes a centrifugal clutch with spherical dead weights which do not allow gradual adjustment of the axial thrust against the clutch closing disc and, owing to the spherical form of the dead weights, produce a tangential point-like contact between the weight itself and the said closing disc, resulting in early wear of the weight with the consequent need for maintenance which requires disassembly of the entire clutch unit.

A further dead-weight clutch is described in FR 1,265,728 which envisages a dead weight formed by a body with an inclined surface which acts against an axially thrusting counter-body in turn having an inclined surface opposite that of the dead weight. In this case the need for two bodies results in an undesirable increase in length in the axial direction of the clutch and also results in the need to change the entire clutch unit in the event of a variation in the thrust force settings.

These clutches, although performing their intended function, therefore have large radial and axial dimensions which are subject to brief continuous and uncontrollable slipping which requires repeated maintenance and adjustment in order to restore the initial settings.

The technical problem which is posed therefore is to provide a centrifugal clutch of the ON/OFF type which is able to provide a solution to the drawbacks of the prior art, being able also to allow quick adjustment of the closing force without having to replace the entire clutch unit.

In connection with this problem it is also required that the clutch should be easy and inexpensive to produce and assemble and have small dimensions and be able to be installed easily also on already existing motors using standard connection means and without the need for special adaptation.

These results are achieved according to the present invention by a friction-disc clutch with centrifugal engagement according to the characteristic features of Claim 1.

Further details may be obtained from the following description of a non-limiting example of embodiment of the subject of the present invention provided with reference to the accompanying drawings in which:
- Figure 1:: is an exploded view of a centrifugal clutch according to the present invention; and
- Figure 2:: is a cross-sectional view of the clutch according to Fig. 1 in the assembled condition.

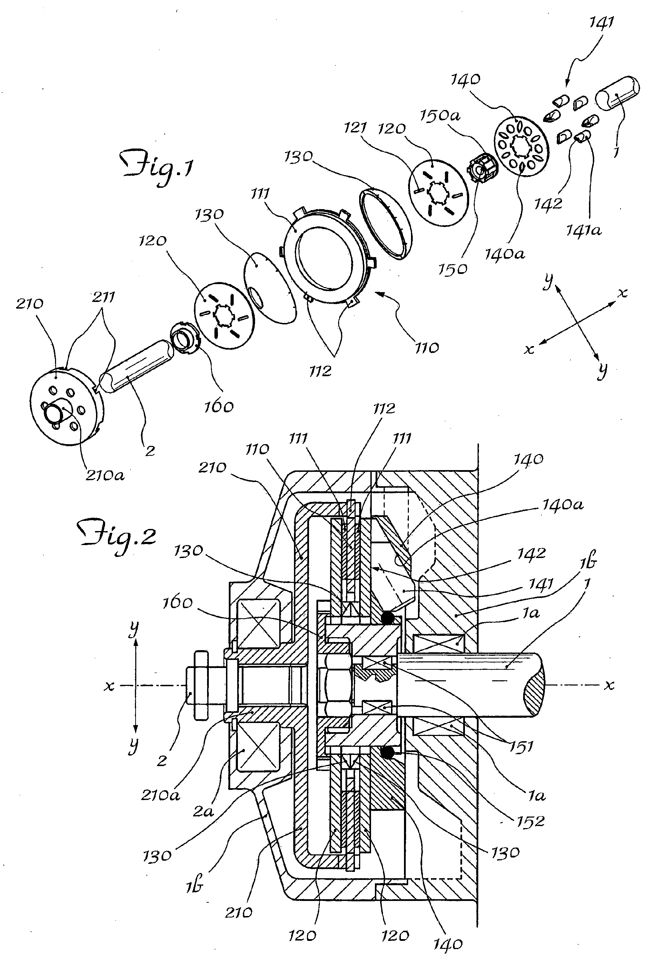

As shown in Fig. 1 and assuming solely for the sake of convenience of description and without any limitation of meaning a pair of reference axes in a longitudinal/axial direction X-X, transverse/radial direction Y-Y, as well as a front part corresponding to the part for engagement of the clutch with the driven shaft and a rear part opposite to the front part, the clutch according to the present invention is arranged between a driving shaft 1, mounted via an associated bearing 1a on a fixed housing 1b, and a driven shaft 2 inserted inside a sleeve 210a of a bell member 210 for closing the clutch, via an associated bearing 2a; in detail the clutch comprises essentially:
- ) a disc 110 which has on its opposite outer surfaces friction material 111 and is mounted on a splined spindle 150 which is coaxial and rotationally integral with the driving shaft 1 by means of a key 151; the disc 110 has lugs 112 extending radially beyond the annular edge of the disc itself and arranged at constant angular distances; said lugs 112 are suitable for engagement with corresponding seats 211 formed in the circumference of the said closing bell member 210;
- ) a pair of axial pressure rings 120 mounted on the splined shaft 150 relative to which they are unable to rotate and arranged on opposite sides of the friction disc 110 and, in the rest condition, kept symmetrically spaced from the latter by the thrusting force of respective Belleville springs 130 arranged between them; preferably the front ring 120 is locked in position by a ring nut 160 for closing the clutch, while the rear ring 120 may move axially on the splined spindle 150, the outward travel being defined by suitable shoulders 152 of the splined spindle;
preferably the Belleville springs 130 are arranged opposite each other so as to form an annular cusp 130a against which the friction disc 110 may rest, being thus stabilised in the radial direction.

A plate 140 is coaxially arranged in an axial position between the driving shaft 1 and one of the friction discs 120, said plate being mounted on the said splined shaft 150 on which it may in turn be displaced in both senses of the axial direction X-X; said plate 140 has through-recesses 140a for receiving dead weights formed as small cylinders 141 which, at the axial end of the side surface 141a directed towards the friction disc, have an inclined surface 142; said recesses 140a and said inclined surfaces 142 have an inclination from the longitudinal axis towards the outer circumference and towards the friction disc of between 25° and 35° and preferably between 28° and 32°.

According to a further embodiment (not shown) it is envisaged that the inclined surface 142 of each dead weight may be formed with a rounded revolving-type profile.

The dead weights will then be designed with suitable dimensions to cause engagement/disengagement of the clutch at a predefined number of revolutions of the driving shaft in accordance with the following operating sequence:
- )in the rest or disengaged condition:
   - the pressure rings 120 are respectively pushed by the action of the springs 130 in the axial direction against the ring nut 160 and against the rear stop 152 of the splined spindle 150, not interfering with the friction disc 110, and the cylinders 141 are radially retracted towards the longitudinal axis X-X;
   - there is therefore no interference between the friction disc 110 which is integral with the bell member 210 and the pressure rings 120; the driven shaft 2 therefore remains stationary in the idle condition;
   - when the driving shaft 1 starts to rotate, the dead weights 141 are pushed radially outwards and start to push with their inclined surfaces 142 against the adjacent pressure ring 120;
   - once the predefined number of revolutions of the driving shaft 1 is reached, the axial thrust of the dead weights 141, which have moved gradually radially outwards, overcomes the opposing thrust of the springs 130, causing closing of the pressure rings 120 onto the friction disc 110 of the driven shaft 2 with consequent engagement of the clutch and initial rotation of the driven shaft.

If the speed of rotation of the driven shaft falls below the predefined number of revolutions for engagement, the dead weights gradually return radially into their seats, allowing the thrust of the springs 130 to prevail again and disengage the clutch.

Tests carried out have shown that, owing to the particular cylindrical form with inclined surface of the dead weights, the clutch according to the invention is able to achieve very precise engagement also at high speeds (9,000 rpm typical during operation) with high engaging thrusts and transmittable torques, but with limited relative slipping, while maintaining small axial and radial dimensions, with low wear of the dead weights since the distribution of the thrust over a surface reduces the specific pressure and therefore the local wear.

It is also envisaged that the dead-weight carrying disc may be formed with several series of receiving seats 140a arranged with a different angle of inclination, for example of between 30° and 35°, so as to obtain different engaging thrusts, by simply arranged the said dead weights 141 inside either one of the series of seats.

In addition, the clutch according to the invention has small axial dimensions and may be designed dry or with an oil bath, with the possibility of changing easily both the dead weights and their arrangement, this making the clutch much more versatile and able to be used in different situations without the need for complicated and costly redefinition of the dimensions of the entire assembly.

In particular adjustment of the clutch closing force and therefore the transmittable torque may be easily performed without disassembling the entire clutch unit, by axially removing only the bell member 210 and adjusting the ring nut 160, greater/lesser loosening/tightening of which causes a variation in the axial reaction force of the Belleville springs 130; since the friction disc is kept radially in position by the cusp-like form of the opposite Belleville springs, once adjustment has been performed, axial re-engagement between the lugs 112 of the disc 110 and the seats 212 of the bell member 200 is simple and immediate.

Although described in connection with certain constructional forms and certain preferred examples of embodiment of the invention, it is understood that the scope of protection of the present patent is defined solely by the following claims.

## Claims

1. Centrifugally engaging clutch arranged between a driving shaft (1), which is connected to a coaxial splined spindle (150), and a driven shaft (2) which is inserted inside a sleeve (210a) of a bell member (210) closing the clutch, comprising a disc (110) which has on its opposite surfaces friction material (111), a pair of axial pressure rings (120) arranged on opposite sides of the friction disc (110), a disc (140) with dead weights (141), arranged on the outside of one of the two pressure rings (120) and rotationally movable together with a driving shaft (1), said disc (140) having at least one series of radial recesses (140a) receiving internally a respective dead weight (141), displaceable in both senses of the radial direction depending on the speed of rotation of said dead-weight disc (140) and able to exert a corresponding axial thrust on said axially movable pressure ring (120), **characterized in that** at least one of said pressure rings (120) being displaceable relative to the other one on said splined spindle (150), at least one Belleville spring is arranged between the friction disc (110) and each pressure ring (120) and said dead weights (141) are formed as small cylinders which have an inclined surface (142) at the axial end of the side surface (141a) for making contact with the friction disc (120).

2. Clutch according to Claim 1, **characterized in that** the recesses (140a) of said dead-weight disc (140) have an inclination relative to the adjacent friction disc of between 25° and 35°.

3. Clutch according to Claim 2, **characterized in that** the recesses (140a) of said dead-weight disc (140) have an inclination relative to the adjacent friction disc preferably of between 28° and 32°.

4. Clutch according to Claim 1, **characterized in that** the inclined surface (142) of each dead weight may be formed with a rounded revolving-type profile.

5. Clutch according to Claim 1, **characterized in that** said disc (140) with dead weights (141) has at least one second series of radial receiving recesses with a different inclination relative to the friction disc compared to the recesses of the first series.

6. Clutch according to Claim 5, **characterized in that** the recesses of said second series have an inclination relative to the friction disc (120) of between 30° and 35°.

7. Clutch according to Claim 1, **characterized in that** said Belleville springs are arranged facing each other so as to form a central annular cusp for radially supporting the friction disc (110).

8. Clutch according to Claim 1, **characterized in that** said friction disc (110,111) has lugs (112) extending radially beyond the annular edge of the disc itself and arranged at constant angular distances.

9. Clutch according to Claim 8, **characterized in that** the annular edge of said bell member (210) closing the clutch has seats (211) suitable for axial engagement with said lugs (112) on the friction disc (110).

10. Clutch according to Claim 1, **characterized in that** it comprises a lock nut (160) for adjusting the compression of the Belleville springs (130), which is axially screwed onto the splined spindle (150) and accessible externally.

## Patentansprüche

1. Eine zentrifugal aktivierende Kupplung angeordnet zwischen einer Antriebswelle (1), die mit einer koaxialen gezahnten Spindel (150) verbunden ist, und einer Abtriebswelle (2), die in einer Muffe (210a) einer Glocke (210), welche die Kupplung schließt, eingesetzt ist, umfassend eine Scheibe (110), die auf ihren gegenüberliegenden Oberflächen Reibungsmaterial (111) hat, ein Paar axialer Druckringe (120) angeordnet auf den der Reibscheibe (110) gegenüberliegenden Seiten, eine Scheibe (140) mit Eigengewichten (141), an der Außenseite einer der beiden Druckringe (120) und mit einer Antriebswelle (1) drehbeweglich angeordnet, wobei die Scheibe (140) mindestens eine Reihe von radialen Ausnehmungen (140a) hat, die intern jeweils ein Eigengewicht (141) aufnehmen, in beide Orientierungen von der radialen Richtung abhängig von der Geschwindigkeit der Drehung der Mitnahmescheibe (140) verschiebbar und in der Lage, eine entsprechende axiale Schubkraft auf den axial beweglichen Druckring (120) auszuüben, **dadurch gekennzeichnet, dass** mindestens einer der Druckringe (120) relativ zu dem anderen auf der gezahnten Spindel (150) verschiebbar ist, mindestens eine Tellerfeder zwischen der Reibscheibe (110) und jedem der Druckringe (120) angeordnet ist und die Eigengewichte (141) als kleine Zylinder ausgebildet sind, die eine geneigte Fläche (142) an dem axialen Ende der Seitenfläche (141a) haben, um einen Kontakt mit der Reibscheibe (120) auszubilden.

2. Kupplung gemäß Anspruch 1, **dadurch gekennzeichnet, dass** die Ausnehmungen (140a) der Mitnahmescheibe (140) eine Neigung relativ zu der benachbarten Reibscheibe zwischen 25° und 35° aufweisen.

3. Kupplung gemäß Anspruch 2, **dadurch gekennzeichnet, dass** die Ausnehmungen (140a) der Mitnahmescheibe (140) eine Neigung relativ zu der benachbarten Reibscheibe vorzugsweise zwischen 28° und 32° aufweisen.

4. Kupplung gemäß Anspruch 1, **dadurch gekennzeichnet, dass** die geneigte Fläche (142) jeden Eigengewichts mit einem abgerundeten Drehtypprofil gebildet werden.

5. Kupplung gemäß Anspruch 1, **dadurch gekennzeichnet, dass** die Scheibe (140) mit Eigengewichten (141) zumindest eine zweite Reihe von radialen aufnehmenden Ausnehmungen mit einer anderen Neigung relativ zu der Reibscheibe im Vergleich zu den Ausnehmungen der ersten Reihe.

6. Kupplung gemäß Anspruch 5, **dadurch gekennzeichnet, dass** die Ausnehmungen der zweiten Reihe eine Neigung relativ zu der Reibscheibe (120) zwischen 30° und 35° aufweisen.

7. Kupplung gemäß Anspruch 1, **dadurch gekennzeichnet, dass** die Tellerfedern einander zugewandt angeordnet sind, um so einen zentralen ringförmigen Höcker zum radialen Stützen der Reibscheibe (110) zu bilden.

8. Kupplung gemäß Anspruch 1, **dadurch gekennzeichnet, dass** die Reibscheibe (110,111) Nasen (112) hat, die sich radial über den ringförmigen Rand der Scheibe selbst erstrecken und in konstanten Winkelabständen angeordnet sind.

9. Kupplung gemäß Anspruch 8, **dadurch gekennzeichnet, dass** der ringförmige Rand der Glocke (210), welche die Kupplung schließt, Sitze (211) hat, die für die axiale Verbindung mit den Nasen (112) auf der Reibscheibe (110) geeignet sind.

10. Kupplung gemäß Anspruch 1, **dadurch gekennzeichnet, dass** sie eine Sicherungsmutter (160) zum Einstellen der Kompression der Tellerfedern (130) umfasst, die axial auf die gezahnte Spindel (150) aufgeschraubt sind und von außen zugänglich sind.

## Revendications

1. Embrayage centrifuge agencé entre un arbre menant (1), qui est en prise avec un axe cannelé coaxial (150), et un arbre mené (2) qui est introduit à l'intérieur d'un manchon (210a) d'un élément cloche (210) confinant l'embrayage, comprenant un disque (110) dont les surfaces opposées portent un matériau de friction (111), une paire de bagues de poussée axiale (120) disposées de chaque côté du disque de friction (110), et un disque (140) doté de poids morts (141), disposé à l'extérieur de l'une ou des deux bagues de poussée (120) et mobile en rotation conjointement avec l'arbre menant (1), ledit disque (140) comportant au moins une série d'évidements radiaux (140a) recevant intérieurement un poids mort respectif (141), pouvant être décalé dans les deux sens de la direction radiale en fonction de la vitesse de rotation dudit disque (140) à poids morts et pouvant exercer une poussée axiale correspondante sur ladite bague de poussée mobile axialement (120), **caractérisé en ce qu'**au moins l'une desdites bagues de poussée (120) peut être décalée par rapport à l'autre sur ledit axe cannelé (150), **en ce qu'**au moins un ressort Belleville est agencé entre le disque de friction (110) et chaque bague de poussée (120), **en ce que** lesdits poids morts (141) sont formés en tant que petits cylindres comportant une surface inclinée (142) au niveau de l'extrémité axiale de la surface latérale (141a), destinée à venir en contact avec le disque de friction (120).

2. Embrayage selon la revendication 1, **caractérisé en ce que** les évidements (140a) dudit disque (140) à poids morts ont une inclinaison par rapport au disque de friction adjacent comprise entre 25° et 35°.

3. Embrayage selon la revendication 2, **caractérisé en ce que** les évidements (140a) dudit disque (140) à poids morts ont une inclinaison par rapport au disque de friction adjacent comprise de préférence entre 28° et 32°.

4. Embrayage selon la revendication 1, **caractérisé en ce que** la surface inclinée (142) de chaque poids mort peut être formée avec un profil de type cylindre arrondi.

5. Embrayage selon la revendication 1, **caractérisé en ce que** ledit disque (140) à poids morts (141) comporte au moins une seconde série d'évidements de réception radiaux ayant une inclinaison différente par rapport au disque de friction par comparaison aux évidements de la première série.

6. Embrayage selon la revendication 5, **caractérisé en ce que** les évidements de ladite seconde série ont une inclinaison par rapport au disque de friction (120) comprise entre 30° et 35°.

7. Embrayage dans la revendication 1, **caractérisé en ce que** lesdits ressorts Belleville sont agencés dans une relation de face à face de façon à former une pointe annulaire centrale destinée à supporter radialement le disque de friction (110) .

8. Embrayage selon la revendication 1, **caractérisé en ce que** ledit disque de friction (110, 111) comporte des tenons (112) s'étendant radialement au-delà du bord annulaire du disque lui-même et étant disposés à des distances angulaires constantes.

9. Embrayage selon la revendication 8, **caractérisé en ce que** le bord annulaire dudit élément cloche (210) confinant l'embrayage comporte des logements (211) appropriés pour une prise axiale avec lesdits tenons (112) du disque de friction (110).

10. Embrayage selon la revendication 1, **caractérisé en ce qu'**il comprend un écrou de blocage (160) permettant de régler la compression des ressorts Belleville (130), lequel est vissé axialement sur l'axe cannelé (150) et est accessible de l'extérieur.
